# EUROPEAN PATENT SPECIFICATION

(11) **EP 0 801 999 B1**
(45) Date of publication and mention of the grant of the patent: **31.03.1999**
(21) Application number: 97660043.7
(22) Date of filing: 17.04.1997
(51) Int. Cl.: B21C 1/22

(54) **Method for joining tubes**
Verfahren zum Zusammenfügen von Rohren
Méthode de raccorder des tuyaux

(30) Priority: 17.04.1996 FI 961689
(43) Date of publication of application: 22.10.1997
(73) Proprietor: Outokumpu Copper Products Oy, 02200 Espoo (FI)
(72) Inventor: Rantala, Terho, 29320 Leineperi (FI)
(74) Representative: Köykkä, Aira Annikki

(56) References cited:
- DE-A- 4 304 636
- US-A- 4 856 703

## Description

The present invention relates to a method for joining tubes, so that the joining takes place in connection with a straightening treatment, prior to the sinking carried out after the last annealing, when there is no mandrel inside the tube.

In the manufacturing of copper and copper alloy tubes, there is carried out - particularly for half-hard tubes - straightening, annealing and sinking after the drawing proper, the purpose of which treatment is to strengthen the annealed tube. The reduction in sinking is only a few percentages, wherefore a mandrel is not needed in sinking. In order to carry out the drawing in continuous operation, the tubes must be jointed. The most practical way to do this is to join them in connection with straightening, prior to annealing.

In the prior art there is known an apparatus for joining tubes for the duration of sinking, in which case there are needed two separate devices in the apparatus, i.e. a tube head compressing device and a joining device. The first tube is driven, in connection with the straightening, to the joining device proper, and it is left there to wait for the next tube. The first end of this next tube is compressed, by means of a separate tube head compressing device, and then it is driven through straightening rollers to the jointing device, where the tube head is directed to inside the first tube, and the tubes are compressed together by means of compressing jaws. Thereafter the tube, complete with the joint, proceeds to annealing and sinking.

A method of joining tubes, wherein an end of one tube is reduced and inserted in the end of another tube is disclosed in US-A-4856703 (nearest prior art).

An object of the method according to the present invention is to simplify the above described procedure of joining tubes. The apparatus used to perform the invention requires only one tube head compressing and jointing device instead of the two devices that were used earlier. The trailing end of each tube is compressed, the tube is left in the apparatus to wait for the leading end of the next tube, which is then driven to overlap the previous tube end, whereafter the tubes are compressed together in one and the same device.

In a method embodying the invention, the tube head compressing and joining device used for jointing tubes is installed in between the preliminary straightening unit connected to annealing and sinking, and the final straightening unit. The tube head compressing device first comprises compressing jaws, which compress the trailing end of the tube, reducing it to about half of its original diameter, and then guiding jaws which guide and centralize the leading end of the next tube over the previous tube, whereafter the compressing jaws press the two tubes together. After the first compressing step, the compressing jaws open, until the next tube is driven over the first, whereafter there follows the second compressing step. The tube head compressing device and the joining device are both devices known as such, wherefore they are not described in more detail here, but according to the present invention, the operation of these two devices is now combined.

The simple realization that instead of reducing the leading end of the tube, there is reduced the trailing end - the straightening equipment can be remarkably simplified, because one additional device and thus one additional step in the process is eliminated, and both functions that were earlier performed separately are now carried out in one and the same device. It is obvious that this saves time, because the apparatus must be driven manually during joining. If there now is only one point of reduction instead of the earlier two, expenses are also saved in addition to time.

The invention is described in more detail with reference to the appended drawings, which schematically illustrate the different steps of forming a tube joint, so that
figure 1 illustrates the trailing end of the first tube and the leading end of the successive tube prior to compressing,
figure 2 illustrates the leading end of the first tube in compressed form,
figure 3 shows the second tube as driven over the first tube, and
figure 4 shows how the tubes are compressed together.

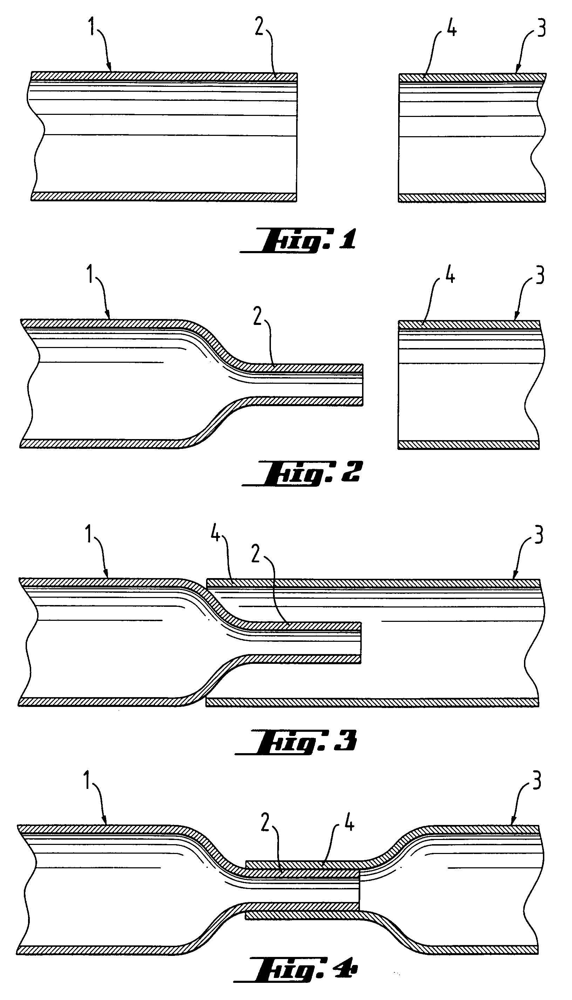

As is seen in figures 1-4, the trailing end 2 of the tube 1 is subjected to compressing by reducing the tube end. Then the first end 4 of the tube 3 is centralized and driven over the trailing end of the tube 1, whereafter the tubes are compressed together.

The method can be applied to the joining of tubes made of other metals than copper and copper alloy.

## Claims

1. A method for joining tubes and straightening, prior to the finishing continuous drawing operation, which drawing is carried out without a mandrel, wherein the joining of the tubes (1, 3) takes place in one step, whereby the trailing end (2) of each tube (1) is compressed, the leading end (4) of the successive tube (3) is driven over the compressed tube end, and the tubes are compressed together in one and the same unit.

2. A method according to claim 1, **characterized** in that the joining of the tubes is carried out between a preliminary straightening unit and a final straightening unit.

3. A method according to claim 1, **characterized** in that the joining of the tubes is carried out in connection with straightening, prior to annealing.

4. A method according to claim 1, **characterized** in that the tubes to be joined are made of copper or copper alloy.

## Patentansprüche

1. Verfahren zum Anschließen von Rohren während des Richtens, vor dem abschließenden kontinuierlichen Ziehen ohne Ziehdorn, dadurch **gekennzeichnet**, daß das Anschließen der Rohre (1, 3) in einem Schritt durchgeführt wird, indem das Restende (2) eines jeden Rohres (1) angespitzt wird, das Startende (4) des folgenden Rohres (3) über das angespitzte Rohr geführt wird, und die Rohre gemeinsam in einer und derselben Vorrichtung angespitzt werden.

2. Verfahren nach Patentanspruch 1, dadurch **gekennzeichnet**, daß das Rohranschließen zwischen der Vor-Richteinheit und der Haupt-Richteinheit stattfindet.

3. Verfahren nach Patentanspruch 1, dadurch **gekennzeichnet**, daß das Rohranschließen während des Richtens, vor dem Glühen durchgeführt wird.

4. Verfahren nach Patentanspruch 1, dadurch **gekennzeichnet**, daß der angeschlossene Rohre aus Kupfer oder einer Kupferlegierung bestehen.

## Revendications

1. Méthode pour joindre des tubes pendant le redressage, avant l'étirage continu de finition effectué sans mandrin, **caractérisée** en ce que la jonction des tubes (1, 3) s'effectue en une étape, de telle façon que la fin (2) de chaque tube (1) est compressée, le début (4) du tube suivant (3) est ensuite amenée par-dessus le tube compressé et les tubes sont compressés en même temps en une seule et même unité.

2. Méthode selon la revendication 1, **caractérisée** en ce que la jonction des tubes est effectuée entre l'unité de redressage préliminaire et l'unité de redressage proprement dite.

3. Méthode selon la revendication 1, **caractérisée** en ce que la jonction des tubes est effectuée pendant le redressage avant le recuit.

4. Méthode selon la revendication 1, **caractérisée** en ce que les tubes qui sont joints sont faits de cuivre ou d'alliage du cuivre.
